# EUROPÄISCHE PATENTSCHRIFT

(11) **EP 3 976 439 B1**
(45) Veröffentlichungstag und Bekanntmachung des Hinweises auf die Patenterteilung: **23.08.2023**
(21) Anmeldenummer: 20746893.5
(22) Anmeldetag: 13.07.2020
(51) Int. Cl.: B61L 1/16, G01M 17/10

(54) **SENSOREINRICHTUNG FÜR EINE ANORDNUNG ZUR DETEKTION UND ANALYSE EINES ENTLANG EINER SPUR, INSBESONDERE ENTLANG EINES GLEISES, BEWEGTEN RADES EINES FAHRZEUGS**
SENSOR DEVICE FOR AN ASSEMBLY FOR DETECTING AND ANALYZING A VEHICLE WHEEL MOVING ALONG A TRACK, IN PARTICULAR ALONG A RAIL TRACK
DISPOSITIF DE CAPTEUR POUR UN ENSEMBLE DE DÉTECTION ET D'ANALYSE D'UNE ROUE D'UN VÉHICULE DÉPLACÉE LE LONG D'UNE VOIE, EN PARTICULIER LE LONG D'UNE VOIE FERRÉE

(30) Priorität: 23.07.2019 DE 102019210867; 15.10.2019 DE 102019215844
(43) Veröffentlichungstag der Anmeldung: 06.04.2022
(73) Patentinhaber: Siemens Mobility GmbH, 81739 München (DE)
(72) Erfinder: FREISE, Rainer, 38124 Braunschweig (DE)
(74) Vertreter: Siemens Patent Attorneys
(86) Internationale Anmeldenummer: PCT/EP2020/069757
(87) Internationale Veröffentlichungsnummer: WO 2021/013610

(56) Entgegenhaltungen:
- DE-A1- 2 347 911
- DE-A1-102004 012 167
- FR-A1- 2 560 845

## Beschreibung

Die Erfindung liegt auf dem Gebiet der Bahnsicherungstechnik, insbesondere der Gleisfreimeldetechnik und betrifft die konstruktive Gestaltung einer Sensoreinrichtung.

Die heutige in der Praxis oft eingesetzte Gleisfreimeldetechnik beruht darauf, dass Achszähleinrichtungen überfahrende Räder eines Schienenfahrzeuges korrekt zählen. Dabei kommt beispielsweise ein übergeordnetes Zählwerk zum Einsatz, welches erkennt, ob eine Ungleichheit zwischen einer an einem ersten Zählpunkt gezählten Achsanzahl der in einen Abschnitt einfahrenden Achsen und einer an einem zweiten Zählpunkt gezählten Achsanzahl der aus dem Abschnitt ausfahrenden Achsen vorliegt. Ist dies der Fall, so wird eine Störung und gegebenenfalls eine Streckensperrung oder auch die Sperrung einer Fahrbahn durch eine dauerhafte Abschrankung generiert.

Dabei kommen häufig Sensoreinrichtungen mit zwei Sensoren (mit zwei Kanälen) - sogenannte Doppelsensoren - zum Einsatz. Mit Doppelsensoren wird bei korrekter Signalüberlappung von Sensorsignalen der beiden Sensoren auch die Fahrtrichtung des überfahrenden Fahrzeuges festgestellt. Überwiegend sind die beiden Sensoren eines Doppelsensors induktive Sensoren. Es sind also Sensoren, bei denen die Eisenmasse des jeweiligen Rades des Fahrzeugs auf die von dem jeweiligen Sensor ausgehenden magnetischen Wechselfelder einwirkt und bei denen ein Empfänger in Abhängigkeit dieser Wirkverbindung digitale oder analoge Signale erzeugt, anhand derer die Überfahrt eines Rades festgestellt wird.

Weit verbreitet und beispielsweise aus der Druckschrift "Zuverlässige Radsensoren als Basis für hochverfügbare Systeme", Signal + Draht (109) 4/2017, Seiten 49-58 bekannt sind insbesondere die folgenden beiden Bauarten induktiver Sensoren, auf welche ein Prinzip aus Sender- und Empfängerkomponente anwendbar ist; welche also nach einem Sender-Empfänger-Prinzip arbeiten. Eine erste Bauart, welche im Weiteren als Bauart mit getrennten Sensorteilen bezeichnet ist, und eine zweite Bauart, welche im Weiteren als eine Bauart eines Spurkranzdetektors bezeichnet ist.

Bei der ersten Bauart sind Sender und Empfänger an verschiedenen Seiten einer Schiene eines Gleises weitgehend gegenüberliegend montiert und wirken basierend auf dem Prinzip einer sich ändernden magnetischen Kopplung bei Radüberfahrt.

Bei der zweiten Bauart wird oft auf der Basis zweier separat arbeitender Spulen, welche an einer Seite der Schiene angeordnet sind, vordringlich der Spurkranz eines Rades detektiert. Auch Sensoren dieser zweiten Bauart wirken basierend auf dem Prinzip einer sich ändernden magnetischen Kopplung bei Radüberfahrt.

Darüber hinaus ist der genannten Druckschrift "Zuverlässige Radsensoren als Basis für hochverfügbare Systeme", Signal + Draht (109) 4/2017, Seiten 49-58 eine dritte Bauart induktiver Sensoren bekannt. Hierbei handelt es sich um eine weitere Bauart eines Spurkranzdetektors, welche einen Oszillator aufweist und nach einem Näherungsschalter-Prinzip arbeitet. In diesem Fall werden Veränderungen von Schwingkreisparametern, insbesondere eine Schwingkreisdämpfung, als Indikator für die Präsenz eines Rades herangezogen. Diese weitere Bauart eines Spurkranzdetektors ist aufgrund ihrer einfachen Bauart in der Praxis weit verbreitet.

Insbesondere bei den genannten drei Bauarten stellen jedoch Eisenmassen tiefhängender anderer Fahrzeugteile ein Problem dar, da eine Eisenmasse eines derartigen anderen Fahrzeugteiles die Sensoren in ähnlicher Weise beeinflusst wie die Eisenmasse eines zu zählenden Rades. Insbesondere sind hierzu tiefhängende Magnetschienenbremsen zu zählen, die auf Grund ihrer Position direkt über der Schiene, ihrer Baugröße und ihrem hohen Anteil an ferromagnetischem Material zum Ansprechen eines Sensors führen können. Die Detektion eines derartigen Fahrzeugteiles kann also zu Zählfehlern führen.

Bei den genannten Doppelsensoren liegen Abtastpunkte so dicht nebeneinander, dass sich die aufgrund der Wirkverbindung mit dem Rad generierten Signale überlappen, und darauf basierend die Fahrtrichtung ermittelt werden kann.

Wenn die durch die Wirkverbindung mit einem Rad erzeugten Signalwerte größer sind als jene, welche bei Wirkverbindungen mit anderen Fahrzeugteilen (beispielsweise mit den genannten Magnetschienenbremsen oder mit anderen tiefhängenden Metallobjekten) ausgegeben werden, dann kann man durch genaue Einstellung einer Raderkennungsschwelle diese gezielt oberhalb dieser Störeinflüsse legen. Es werden also nur die wirklichen Räder gezählt.

Problematisch ist hierbei, dass alle Schienenfahrzeuge auf der Strecke zuerst hinsichtlich der Sensorbeeinflussung vermessen werden müssen, um danach die Raderkennungsschwelle festzulegen. Auch muss bei Abnutzung der Schiene die Schwelle unter Umständen nachjustiert werden, was wiederum mit Messaufwand verbunden ist. Wenn die Sensorsignale, welche ein derartiger Doppelsensor bei Überfahrt eines Rades ausgibt, und die Sensorsignale, welche dieser Doppelsensor beim Passieren eines störenden Metallkörpers ausgibt, ähnlich hoch sind, dann ist eine Unterscheidung zwischen Rad und störendem Metallkörper auf diese Art nicht mehr möglich.

Bei der Bahnsicherungstechnik kommen auch andere Wirkprinzipien als das genannte induktive Wirkprinzip, also auch andere Typen von Sensoren als die genannten induktiven Sensoren zum Einsatz.

So sind aus der Druckschrift "Die Herausforderung an Raddetektion und Achszählung in der Zukunft", Signal + Draht (103) 9/2011, Seiten 6 bis 12 beispielsweise auch mechanisch wirkende, hydraulisch wirkende, pneumatisch wirkende und magnetisch wirkende Schienenkontakte bekannt.

Die Erfindung betrifft eine Sensoreinrichtung für eine Anordnung zur Detektion und Analyse eines entlang einer Spur, insbesondere entlang eines Gleises, bewegten Rades eines Fahrzeugs mit mehr als zwei in Längsrichtung der Spur angeordneten Sensoren.

Eine gattungsgemäße Sensoreinrichtung ist aus der Druckschrift DE 23 47 911 A1 bekannt. Bei den dort zum Einsatz kommenden Sensoren handelt es sich um Impulsgeber, wobei mindestens zwei dieser Impulsgeber in Fahrtrichtung in einem solchen Abstand voneinander angeordnet sind, dass sie beim Durchlauf von Achsen niemals gleichzeitig, jedoch beim Vorbeibewegen von langgestreckten, an den Fahrzeugen angebrachten Metallteilen, insbesondere von die Achszählung störenden Magnetschienenbremse, gleichzeitig beeinflusst sind.

Auch aus der Druckschrift FR 2 560 845 A1 ist eine gattungsgemäße Sensoreinrichtung bekannt, die derart gestaltet ist, dass von einem vorbeifahrenden Rad immer nur maximal zwei Sensoren gleichzeitig beeinflusst, werden können.

Eine weitere gattungsgemäße Sensoreinrichtung ist aus der Druckschrift EP 1 575 816 B1 bekannt. Bei den dort zum Einsatz kommenden Sensoren handelt es sich um mechanisch wirkende Sensoren. Wenn ein jeweiliger dieser Sensoren mit dem Rad wirkverbunden ist, dann gibt er ein vom Ausmaß seiner jeweiligen Wirkverbindung mit dem Rad abhängiges Sensorsignal aus, wobei maximal zwei der Sensoren gleichzeitig mit dem Rad wirkverbunden sind. Eine Auswerteeinrichtung erfasst die Signale der einzelnen Sensoren über die Zeit als Messkurven in einem Weg-Zeit-Diagramm. Tangenten, an diese Messkurven angelegt, ergeben einen annähernd sinusförmigen Verlauf, welcher der Rundheit des Rades über einen Umfang der Radlauffläche entspricht. Die Auswerteeinrichtung ermittelt also anhand der Sensorsignale der Sensoren eine Kontureigenschaft des Rades, nämlich dessen Rundheit. Dabei wird unter der Rundheit eines überfahrenden Rades die Differenz des Umfangsradius der Spurkranzkuppe und des Radius der Lauffläche des Rades in einer Messebene verstanden.

Ausgehend von einer Sensoreinrichtung mit den Merkmalen des Oberbegriffes des Patentanspruches 1 liegt der Erfindung die Aufgabe zu Grunde, diese derart zu gestalten, dass ein überfahrendes Rad sicher als solches erkannt und somit von anderen überfahrenden Fahrzeugteilen bzw. Objekten unterschieden werden kann, um Zählfehler zu vermeiden.

Gelöst wird diese Aufgabe mit der erfindungsgemäßen Sensoreinrichtung nach Anspruch 1, bei welcher die Sensoren derart angeordnet sind, dass zu einem Zeitpunkt zumindest drei der Sensoren gleichzeitig mit dem Rad wirkverbunden sind, wobei ein jeder der zumindest drei Sensoren ausgebildet ist, ein vom Ausmaß seiner jeweiligen Wirkverbindung mit dem Rad zu dem genannten Zeitpunkt abhängiges Sensorsignal auszugeben.

Die zumindest drei Sensoren der Sensoreinrichtung erfassen also gleichzeitig - nämlich zu dem genannten Zeitpunkt - Sensorsignale, welche vom Ausmaß der jeweiligen Wirkverbindung mit dem Rad abhängen. Anhand der von der Sensoreinrichtung ausgegebenen zumindest drei Signalen der zumindest drei Sensoren und der Anordnung der zumindest drei Sensoren in der Längsrichtung der Spur kann ein Abbild des Rades erzeugt werden, welches sich von Abbildern anderer tiefhängender Fahrzeugteile unterscheiden lässt. Wesentlich ist also, dass die zumindest drei Sensoren so eingerichtet sind, insbesondere entlang der Längsrichtung der Spur so angeordnet sind, dass sie zu dem genannten Zeitpunkt tatsächlich gleichzeitig in Wirkverbindung mit dem Rad stehen, dass also jeder von ihnen zu dem genannten Zeitpunkt ein auswertbaren Sensorsignal liefert.

Die Aufgabe der Erfindung wird also bereits mit einer Sensoreinrichtung gelöst, welche nur die genannten drei erfindungsgemäßen Sensoren aufweist.

Um einen Konturverlauf des Rades möglichst genau bestimmen zu können - also um die Auflösung des mit dem Konturverlauf bestimmten Abbildes des Rades erhöhen zu können - kann es vorteilhaft sein, wenn die Sensoreinrichtung mehr als drei Sensoren aufweist. Es sei aber ausdrücklich darauf hingewiesen, dass bereits drei Sensoren an sich ausreichen. Mehr als drei Sensoren dienen beispielsweise der Verfeinerung der Auflösung und können somit zu einer verbesserten Analyse beitragen.

Unter einem Sensorsignal soll dabei ein Zeichen verstanden werden, durch welches eine Information transportiert wird. Die genannten Signale transportieren als Information insbesondere jeweils ein dem Ausmaß der Wirkverbindung des jeweiligen Sensors mit dem Rad zu dem genannten Zeitpunkt entsprechenden Wert bzw. Betrag. Im Rahmen der Erfindung steht ein Sensor dann in Wirkverbindung mit dem Rad beziehungsweise ist dann mit dem Rad wirkverbunden, wenn der dem Ausmaß der Wirkverbindung entsprechende Wert bzw. Betrag größer als Null ist oder alternativ größer als ein vorgegebener Schwellwert ist.

Es wird als vorteilhaft angesehen, wenn die Sensoren nach einem Näherungsschalter-Prinzip arbeiten oder nach einem Sender-Empfänger-Prinzip arbeiten, wobei - im Falle des Sender-Empfänger-Prinzips - jeder der Sensoren jeweils einen eigenen Empfänger aufweist und wobei jeder der Sensoren jeweils einen eigenen Sender aufweist oder zumindest zwei der Sensoren einen gemeinsamen Sender aufweisen.

Auch wird es als vorteilhaft angesehen, wenn jeder der Sensoren als ein induktiver Sensor ausgebildet ist. Wenn also jeder der Sensoren jeweils derart eingerichtet ist, dass sein Sensorsignal zu dem genannten Zeitpunkt davon abhängig ist, in welcher Lage sich eine Eisenmasse des Rades zu dem genannten Zeitpunkt in Bezug auf seine Sensorposition befindet.

Es sei aber ausdrücklich darauf hingewiesen, dass die Erfindung weder darauf beschränkt ist, dass die Sensoren nach einem Näherungsschalter-Prinzip oder einem Sender-Empfänger-Prinzip arbeiten, noch darauf, dass die Sensoren als induktive Sensoren ausgebildet sind.

Auch wird es vorteilhaft angesehen, wenn die Sensoren derart angeordnet sind, dass zu dem genannten Zeitpunkt, zu welchem die zumindest drei der Sensoren gleichzeitig mit dem Rad wirkverbunden sind, zumindest ein weiterer der Sensoren mit einem weiteren Objekt des Fahrzeugs wirkverbunden ist.

Durch eine derartige Ausgestaltung der Sensoreinrichtung, welche eine bevorzugte räumliche Ausdehnung der Sensoreinrichtung in der Schienenlängsrichtung darstellt, ist es möglich, dass das Rad und das weitere Objekte gleichzeitig als Einzelobjekte erkannt werden. Die Auswerteeinrichtung könnte darauf basierend - beispielsweise anhand des Abstandes des Rades zu dem Objekt - eine Bewertung vornehmen.

Vorzugsweise sind die Sensoren Teil einer Sensoreinheit der Sensoreinrichtung. Alternativ hierzu kann aber vorgesehen sein, dass zumindest einer der Sensoren Teil einer weiteren Sensoreinheit der Sensoreinrichtung ist. Es ist also alternativ möglich zwei oder auch mehr Sensoreinheiten aneinander zu reihen, um beispielsweise unter Nutzung mehrerer Sensoreinheiten die Auflösung des Abbildes zu erhöhen.

Insbesondere um die Montage zu verbessern und die Sensoren vor äußeren Einflüssen, beispielsweise Verschmutzungen und klimatischen Belastungen zu schützen, ist es vorteilhaft, wenn jede Sensoreinheit ein Sensorgehäuse aufweist, in welchem seine Sensoren, insbesondere mit Abstand zueinander, angeordnet sind.

Die Erfindung betrifft auch eine Anordnung nach Anspruch 7 zur Detektion und Analyse eines entlang einer Spur, insbesondere entlang eines Gleises, bewegten Rades eines Fahrzeugs, welche zumindest eine Sensoreinrichtung nach einem der Ansprüche 1 bis 6 und eine Auswerteeinrichtung aufweist, wobei die Auswerteeinrichtung eingerichtet ist, einen Konturverlauf des Rades anhand eines Zusammenhanges zwischen der Anordnung der zumindest drei Sensoren in der Längsrichtung der Spur und ihren zu dem Zeitpunkt erfassten Sensorsignalen, insbesondere als Funktion oder Kennlinie, zu ermitteln.

Bei einer bevorzugten Ausgestaltung der erfindungsgemäßen Anordnung ist die Auswerteeinrichtung eingerichtet, das Rad als solches zu erkennen, wenn der ermittelte Konturverlauf einer sich im Wesentlichen entlang eines Kreisbogens erstreckenden Kontur entspricht.

Bei einer anderen bevorzugten Ausgestaltung der erfindungsgemäßen Anordnung ist die Auswerteeinrichtung eingerichtet, das Rad als solches zu erkennen, wenn der ermittelte Konturverlauf einer sich im Wesentlichen entlang eines Kreisbogens erstreckenden Kontur entspricht, deren Krümmung einen vorgegebenen Krümmungswert überschreitet oder einem vorgegebenen Radkrümmungswert entspricht.

Es sei aber darauf hingewiesen, dass der ermittelte Konturverlauf nicht zwingend einer sich im Wesentlichen entlang eines Kreisbogens erstreckenden Kontur entsprechen muss.

Auch bestimmte zeitliche Abfolgen von größer / kleiner Signalpegeln können ausreichend sein, um das Rad als solches zu erkennen.

Vorzugsweise weist die erfindungsgemäße Anordnung eine Zähleinrichtung auf, wobei die Auswerteeinrichtung eingerichtet ist, bei Erkennen eines Rades der Zähleinrichtung eine Überfahrt des Rades anzuzeigen.

Die Erfindung betrifft auch eine Gleisfreimeldeanlage nach Anspruch 11 mit zumindest einer Anordnung nach einem der Ansprüche 7 bis 10.

Darüber hinaus betrifft die Erfindung ein Verfahren nach Anspruch 12 zum Betrieb einer Anordnung zur Detektion und Analyse eines entlang einer Spur, insbesondere entlang eines Gleises, bewegten Rades eines Fahrzeugs, bei dem mehr als zwei in Längsrichtung der Spur angeordnete Sensoren bereitgestellt werden.

Auch im Hinblick auf das erfindungsgemäße Verfahren liegt der Erfindung die Aufgabe zu Grunde, dieses derart zu gestalten, dass ein überfahrendes Rad sicher als solches erkannt und somit von anderen überfahrenden Fahrzeugteilen bzw. Objekten unterschieden werden kann, um Zählfehler zu vermeiden.

Gelöst wird diese Aufgabe mit einem Verfahren nach Anspruch 11, bei dem die Sensoren derart angeordnet bereitgestellt werden, dass zu einem Zeitpunkt zumindest drei der Sensoren gleichzeitig mit dem Rad wirkverbunden sind, wobei ein jeder der zumindest drei Sensoren ein vom Ausmaß seiner jeweiligen Wirkverbindung mit dem Rad zu dem Zeitpunkt abhängiges Sensorsignal ausgibt.

Es wird als vorteilhaft angesehen, wenn ein Konturverlauf des Rades anhand eines Zusammenhanges zwischen der Anordnung der zumindest drei Sensoren in der Längsrichtung der Spur und ihren zu dem Zeitpunkt erfassten Sensorsignalen, insbesondere als Funktion oder Kennlinie, ermittelt wird.

Dann kann das Rad als solches erkannt werden, wenn der ermittelte Konturverlauf einer sich im Wesentlichen entlang eines Kreisbogens erstreckenden Kontur entspricht.

Alternativ hierzu kann das Rad als solches erkannt werden, wenn der ermittelte Konturverlauf einer sich im Wesentlichen entlang eines Kreisbogens erstreckenden Kontur entspricht, deren Krümmung einen vorgegebenen Krümmungswert überschreitet oder einem vorgegebenen Radkrümmungswert entspricht. Vorzugsweise wird bei Erkennen eines Rades eine Überfahrt des Rades angezeigt.

Die Erfindung ist im Weiteren anhand der Figuren 1 bis 3 näher erläutert. Dabei zeigen die
- Figur 1: eine erfindungsgemäße Anordnung als Teil einer Gleisfreimeldeanlage, wobei sich über einer erfindungsgemäßen Sensoreinrichtung der Anlage ein Rad eines Schienenfahrzeugs befindet, die
- Figur 2: die Anordnung gemäß Figur 1, wobei sich über der erfindungsgemäßen Sensoreinrichtung der Anlage zusätzlich zu dem Rad ein weiteres Objekt befindet, und die
- Figur 3: die Anordnung gemäß den Figuren 1 und 2, wobei sich über der der erfindungsgemäßen Sensoreinrichtung der Anlage kein Rad, sondern ein anderes Objekt befindet.

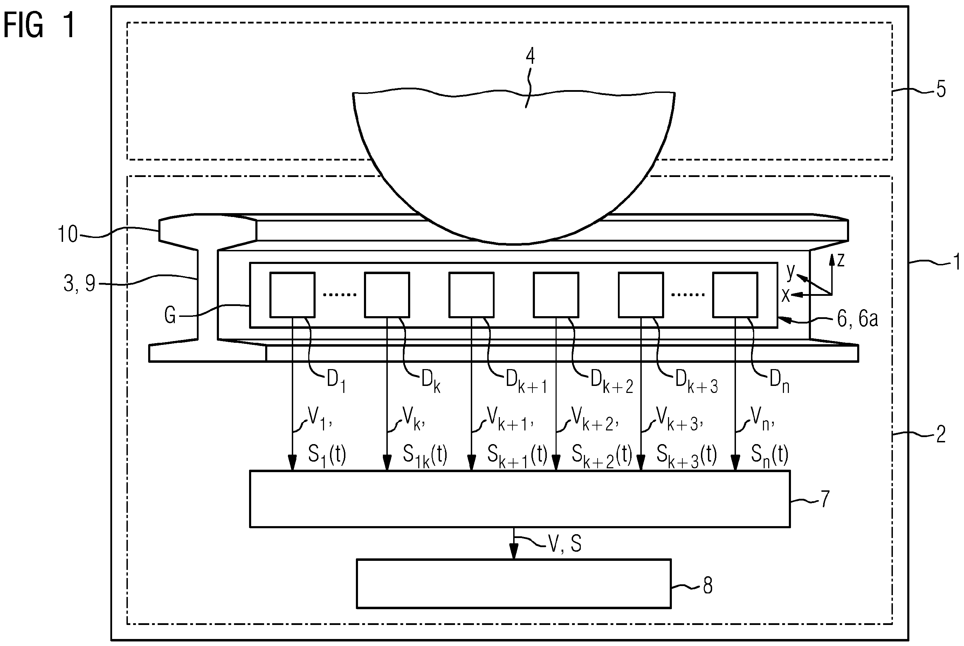

Die Figur 1 zeigt schematisch eine Gleisfreimeldeanlage 1 mit einer erfindungsgemäße Anordnung 2 zur Detektion und Analyse eines entlang einer Spur 3 bewegten Rades 4 eines Fahrzeugs 5 zu einem Zeitpunkt t.

Die Spur 3 ist hier ein Gleis und das Fahrzeug 5 ist hier ein Schienenfahrzeug.

Die erfindungsgemäße Anordnung 2 weist eine erfindungsgemäße Sensoreinrichtung 6, eine Auswerteeinrichtung 7, eine Zähleinrichtung 8 sowie Signalübertragungspfade V₁, ... Vₖ, Vₖ₊₁, Vₖ₊₂, Vₖ₊₃, ..., Vₙ und einen weiteren Signalübertragungspfad V auf.

Eine Mehrzahl n Sensoren D₁, ... Dₖ, Dₖ₊₁, Dₖ₊₂, Dₖ₊₃, ..., Dₙ der Sensoreinrichtung 6, welche im Weiteren auch als Detektoren bezeichnet sind, sind dabei in einer Längsrichtung x der Spur angeordnet und über jeweils einen der Signalübertragungspfade V₁, ... Vₖ, Vₖ₊₁, Vₖ₊₂, Vₖ₊₃, ..., Vₙ mit der Auswerteeinrichtung 7 verbunden.

Die Auswerteeinrichtung 7 ist über den weiteren Signalübertragungspfad V mit der Zähleinrichtung 8 verbunden.

An sich ist es für die Erfindung ausreichend, wenn die Sensoreinrichtung drei Sensoren aufweist. Die gezeigte Sensoreinrichtung 6 weist hier beispielhaft mehr als drei Sensoren auf.

Die gezeigte Sensoreinrichtung 6 besteht aus einer einzigen Sensoreinheit 6a. Die Sensoren D₁, ... Dₖ, Dₖ₊₁, Dₖ₊₂, Dₖ₊₃, ..., Dₙ sind bei der gezeigten Ausführungsform der erfindungsgemäßen Anordnung 2 also Teil der einzigen Sensoreinheit 6a der Sensoreinrichtung 6, welche zusätzlich zu den Sensoren D₁, ... Dₖ, Dₖ₊₁, Dₖ₊₂, Dₖ₊₃, ..., Dₙ ein Sensorgehäuse G aufweist, in welchem die Sensoren D₁, ... Dₖ, Dₖ₊₁, Dₖ₊₂, Dₖ₊₃, ..., Dₙ zueinander mit Abstand angeordnet sind.

Die Sensoren (Detektoren) D₁, ... Dₖ, Dₖ₊₁, Dₖ₊₂, Dₖ₊₃, ..., Dₙ sind dabei in einer gemeinsamen, parallel zur Querrichtung y der Spur verlaufenden Messebene angeordnet.

Grundsätzlich ist es aber auch möglich, mehr als die eine Sensoreinheit 6a - also zwei oder mehr Sensoreinheiten in Schienenlängsrichtung x aneinander zu reihen, um somit prinzipiell eine beliebig lange Sensoreinrichtung bereitzustellen.

Nicht gezeigt ist eine Befestigungseinrichtung, mittels derer eine jeweilige Sensoreinheit - hier die einzige Sensoreinheit 6a der Sensoreinrichtung 6 an einer Schiene 9 des Gleises 3 befestigt wird.

Wie dargestellt ist also die Sensoreinheit 6, welche hier die Sensoreinrichtung 6a bildet, an der Schiene 9 in Längsrichtung x des Gleises 3, welche im Weiteren auch als Schienenlängsrichtung bezeichnet ist, seitlich angebracht.

Die Sensoreinheit 6a und damit die Sensoreinrichtung 6 weist also die Mehrzahl n der einzelnen Sensoren (Detektoren) D₁, ... Dₖ, Dₖ₊₁, Dₖ₊₂, Dₖ₊₃, ..., Dₙ auf.

Die gezeigten Sensoren D₁, ... Dₖ, Dₖ₊₁, Dₖ₊₂, Dₖ₊₃, ..., Dₙ sind hier beispielhaft in einer der Bauarten eines Spurkranzdetektors ausgebildet. Prinzipiell gilt aber gleiches für die Bauart mit getrennten Sensorteilen. Bei der Bauart mit getrennten Sensorteilen würde sich auf der gegenüber liegenden Schienenseite das Sendergehäuse befinden, wobei, wie bereits gesagt, nicht zwingend ein Sender pro Detektor notwendig wäre. Je nach Ausführung kann ein Sender auch für mehrere Detektoren ausreichend, also mehreren Empfängern zugeordnet sein.

Die Sensoren (Detektoren) Dₖ, Dₖ₊₁, Dₖ₊₂, Dₖ₊₃ detektieren zu dem Zeitpunkt t die überfahrende Eisenmasse des Rades 4 und geben ihrer Wirkverbindung mit dem Rad 4 entsprechende analoge oder digitale Sensorsignale Sₖ(t), Sₖ₊₁(t), Sₖ₊₂(t), Sₖ₊₃(t) aus. Die Darstellung hier zeigt eine Seitenansicht auf eine Spurkranzseite des Rades 4, welche einen Schienenkopf 10 überdeckt.

Die Sensoren D₁, ... Dₖ, Dₖ₊₁, Dₖ₊₂, Dₖ₊₃, ..., Dₙ der Sensoreinrichtung sind also derart angeordnet, dass zu dem Zeitpunkt t zumindest drei der Sensoren, nämlich hier die Sensoren Dₖ, Dₖ₊₁, Dₖ₊₂, Dₖ₊₃, gleichzeitig mit dem Rad 4 wirkverbunden sind. Dabei ist ein jeder der Sensoren Dₖ, Dₖ₊₁, Dₖ₊₂, Dₖ₊₃ ausgebildet, das vom Ausmaß seiner jeweiligen Wirkverbindung mit dem Rad 4 zu dem Zeitpunkt t abhängige Sensorsignal Sₖ(t), Sₖ₊₁(t), Sₖ₊₂(t) bzw. Sₖ₊₃(t) auszugeben.

Zur Verdeutlichung sind hier nur die sich gerade unter dem Rad befindlichen Sensoren (Detektoren) Dₖ, Dₖ₊₁, Dₖ₊₂, Dₖ₊₃ und die äußeren der Sensoren (Detektoren) D₁, Dₙ dargestellt. Dazwischen können sich je nach Ausführung der Sensoreinheit 6a noch mehr Sensoren (Detektoren) befinden.

Die Sensoreinrichtung 6 "tastet" also mit ihren Detektoren D₁, ... Dₖ, Dₖ₊₁, Dₖ₊₂, Dₖ₊₃, ..., Dₙ alle über ihr befindlichen Metallobjekte gleichzeitig ab, wobei die Auflösung vom Abstand der einzelnen Detektoren D₁, ... Dₖ, Dₖ₊₁, Dₖ₊₂, Dₖ₊₃, ..., Dₙ zueinander abhängig ist.

In der Figur 1 ist das überfahrendes metallisches Rad 4 zur Hälfte dargestellt. Dieses Rad 4 beeinflusst auf Grund seines Durchmessers die unter ihm befindlichen Detektoren Dₖ, Dₖ₊₁, Dₖ₊₂, Dₖ₊₃. Die Detektoren Dₖ₊₁ und Dₖ₊₂ liefern dabei ein stärkeres Signal, also Signaldaten, die einem größeren Signalwert bzw. höheren Signalpegel entsprechen, als die seitlich liegenden Detektoren Dₖ und Dₖ₊₃, die weniger Eisen detektieren und dadurch ein schwächeres Signal liefern. Je nach Detektordichte ergibt sich also ein entsprechend genaues Abbild des Rades 4 bzw. des Spurkranzes. Aus den Signaldaten kann der Konturverlauf des Rades als eine sich entlang eines Kreisbogens erstreckenden Kontur (runde Kontur) des Rades und damit das Rades als solches erkannt werden. Das Rad kann anhand des erkannten Konturverlaufes von anderen überfahrenden Objekten unterschieden werden. Diese Unterscheidungsmöglichkeit besteht auch statisch, wenn das Rad über der Sensoreinrichtung anhält.

Die Verarbeitung der Sensorsignale S₁(t), ... Sₖ(t), Sₖ₊₁(t), Sₖ₊₂(t), Sₖ₊₃(t), ..., Sₙ(t) erfolgt in der Auswerteeinrichtung 7, welcher die Sensorsignale S₁(t), ... Sₖ(t), Sₖ₊₁(t), Sₖ₊₂(t), Sₖ₊₃(t), ..., Sₙ(t) der Sensoren D₁, ... Dₖ, Dₖ₊₁, Dₖ₊₂, Dₖ₊₃, ..., Dₙ über die Signalübertragungspfade V₁, ... Vₖ, Vₖ₊₁, Vₖ₊₂, Vₖ₊₃, ..., Vₙ zugeführt werden.

Die Auswerteeinrichtung 7 verarbeitet die eingehenden Sensorsignale. Zu dem in der Figur 1 dargestellten Zeitpunkt die Sensorsignale Sₖ(t), Sₖ₊₁(t), Sₖ₊₂(t) und Sₖ₊₃(t).

Die Auswerteeinrichtung 7 ist eingerichtet, einen Konturverlauf des Rades 4 anhand eines Zusammenhanges zwischen der räumlichen Anordnung der zumindest drei Sensoren Dₖ, Dₖ₊₁, Dₖ₊₂, Dₖ₊₃ in der Längsrichtung x der Spur 3 und ihren zu dem Zeitpunkt t erfassten Sensorsignalen Sₖ(t), Sₖ₊₁(t), Sₖ₊₂(t), Sₖ₊₃(t), insbesondere als Funktion oder Kennlinie, zu ermitteln.

Außerdem ist die Auswerteeinrichtung 7 eingerichtet, das Rad 4 als solches zu erkennen, wenn der ermittelte Konturverlauf einer sich im Wesentlichen entlang eines Kreisbogens erstreckenden Kontur entspricht.

Alternativ hierzu kann die Auswerteeinrichtung 7 eingerichtet sein, das Rad als solches zu erkennen, wenn der ermittelte Konturverlauf einer sich im Wesentlichen entlang eines Kreisbogens erstreckenden Kontur entspricht, deren Krümmung einen vorgegebenen Krümmungswert überschreitet oder einem vorgegebenen Radkrümmungswert entspricht.

Darüber hinaus ist die Auswerteeinrichtung 7 eingerichtet, bei Erkennen des Rades der Zähleinrichtung 8 eine Überfahrt des Rades anzuzeigen. Das Anzeigen der Überfahrt erfolgt mittels eines Signals S, welches über den Signalübertragungspfad V zu der Zähleinrichtung 8 gelangt.

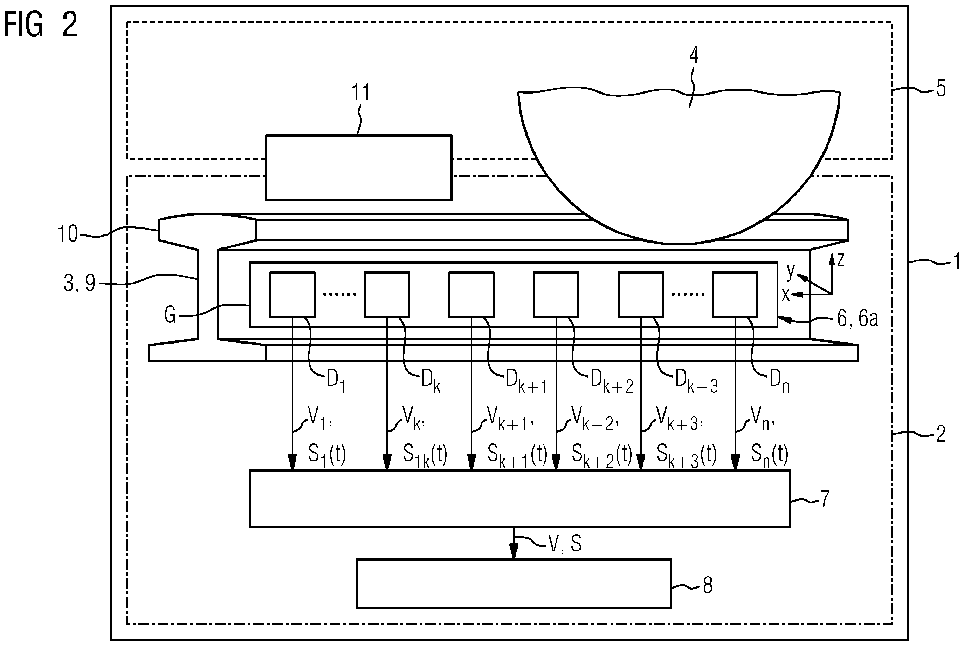

In der Figur 2 befindet sich das Rad 4 am rechten Rand der Sensoreinrichtung 6 und wird daher hauptsächlich von den Detektoren Dₖ₊₂, Dₖ₊₃, ..., Dₙ erkannt. Am linken Rand der Sensoreinrichtung befindet sich ein weiteres Objekt 11, welches von den Sensoren D₁, ... Dₖ registriert wird. Der Sensor Sₖ₊₁ dazwischen erkennt kein Metall und erzeugt damit auch keine Signaldaten, also keinen Signalwert bzw. keinen Signalpegel, welcher über Null bzw. alternativ über einer vorgegebenen Signalschwelle ungleich Null liegt.

Durch die räumliche Ausdehnung der Sensoreinrichtung 6 in der Schienenlängsrichtung x kann die Sensoreinrichtung 6 also das Rad 4 und das Objekte 11 gleichzeitig als Einzelobjekte erkennen und die Auswerteeinrichtung könnte beispielsweise auch anhand des Abstandes des Rades 4 zu dem Objekt 11 eine Bewertung vornehmen.

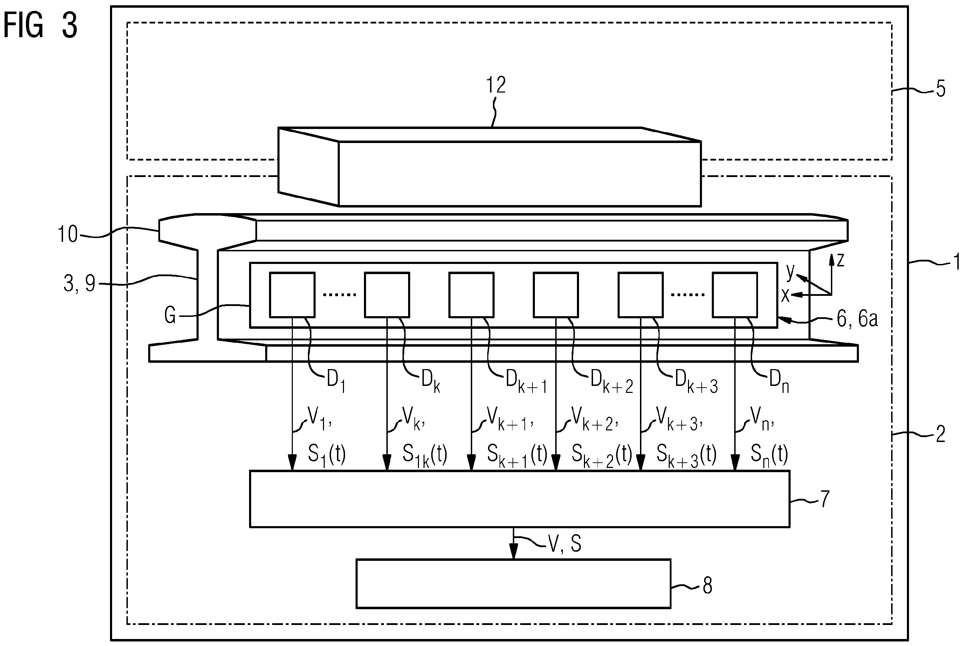

In der Figur 3 überquert ein in der Schienenlängsrichtung x ausgedehntes anderes Metallobjekt 12 die Sensoreinrichtung 6. Die Detektoren Dₖ, Dₖ₊₁, Dₖ₊₂, Dₖ₊₃ unterhalb des Objektes 12 werden näherungsweise alle die gleichen Sensorsignale (den gleichen Signalpegel) liefern.

Daraus lässt sich auf eine in Schienenlängsrichtung x geradlinig ausgedehnte Geometrie, also auf einen geradlinig verlaufenden Konturverlauf des Objektes 12 schließen, was wiederum ermöglicht darauf zu schließen, dass es sich bei dem Objekt 12 nicht um ein Rad handelt.

Die erfindungsgemäße in der Schienenlängsrichtung x räumlich gestreckte Sensoreinrichtung 6 ermöglicht also eine Analyse von Geometrien überfahrender oder darüberstehender Objekte, insbesondere die Unterscheidung in runde oder langgestreckte, ebene Metallobjekte. Dabei ist sowohl eine dynamische als auch die statische Analyse der Geometrien darüber befindlicher Objekte möglich, es ist also unerheblich, ob sich die Objekte zum Zeitpunkt t bewegen oder stehen.

Die erfindungsgemäße Sensoreinrichtung bzw. die erfindungsgemäße Anordnung ermöglich einer Reduzierung von Zählfehlern.

Da insbesondere Magnetschienenbremsen bei den eingangs genannten, bekannten Doppelsensoren zu Zählfehlern geführt haben, ist der Einsatz der erfindungsgemäßen Sensoreinrichtung bzw. der erfindungsgemäßen Anordnung insbesondere im Schienennahverkehr, bei dem Magnetschienenbremsen besonders häufig anzutreffen sind, zu empfehlen.

## Patentansprüche

1. Sensoreinrichtung (6) für eine Anordnung (2) zur Detektion und Analyse eines entlang einer Spur (3), insbesondere entlang eines Gleises, bewegten Rades (4) eines Fahrzeugs (5) mit mehr als zwei in Längsrichtung (x) der Spur (3) angeordneten Sensoren (D₁, ... Dₖ, Dₖ₊₁, Dₖ₊₂, Dₖ₊₃, ..., Dₙ),
**dadurch gekennzeichnet, dass**
die Sensoren (D₁, ... Dₖ, Dₖ₊₁, Dₖ₊₂, Dₖ₊₃, ..., Dₙ) derart angeordnet sind, dass zu einem Zeitpunkt (t) zumindest drei (Dₖ, Dₖ₊₁, Dₖ₊₂, Dₖ₊₃) der Sensoren gleichzeitig mit dem Rad wirkverbunden sind,
wobei ein jeder der zumindest drei Sensoren (Dₖ, Dₖ₊₁, Dₖ₊₂, Dₖ₊₃) ausgebildet ist, ein vom Ausmaß seiner jeweiligen Wirkverbindung mit dem Rad (4) zu dem Zeitpunkt (t) abhängiges Sensorsignal (Sₖ(t), Sₖ₊₁(t), Sₖ₊₂(t), Sₖ₊₃(t)) auszugeben.

2. Sensoreinrichtung (6) nach Anspruch 1,
**dadurch gekennzeichnet, dass**
die Sensoren (D₁, ... Dₖ, Dₖ₊₁, Dₖ₊₂, Dₖ₊₃, ..., Dₙ)
- nach einem Näherungsschalter-Prinzip arbeiten oder
- nach einem Sender-Empfänger-Prinzip arbeiten, wobei jeder der Sensoren jeweils einen eigenen Empfänger aufweist und wobei jeder der Sensoren jeweils einen eigenen Sender aufweist oder zumindest zwei der Sensoren einen gemeinsamen Sender aufweisen.

3. Sensoreinrichtung (6) nach einem der Ansprüche 1 oder 2,
**dadurch gekennzeichnet, dass**
jeder der Sensoren (D₁, ... Dₖ, Dₖ₊₁, Dₖ₊₂, Dₖ₊₃, ..., Dₙ) als ein induktiver Sensor ausgebildet ist.

4. Sensoreinrichtung (6) nach einem der Ansprüche 1 bis 3,
**dadurch gekennzeichnet, dass**
die Sensoren (D₁, ... Dₖ, Dₖ₊₁, Dₖ₊₂, Dₖ₊₃, ..., Dₙ) derart angeordnet sind, dass zu dem Zeitpunkt (t), zu welchem die zumindest drei (Dₖ, Dₖ₊₁, Dₖ₊₂, Dₖ₊₃) der Sensoren gleichzeitig mit dem Rad (4) wirkverbunden sind, zumindest ein weiterer (D₁, ... Dₖ) der Sensoren mit einem weiteren Objekt (11) des Fahrzeugs wirkverbunden ist.

5. Sensoreinrichtung (6) nach einem der Ansprüche 1 bis 4,
**dadurch gekennzeichnet,**
**dass** die Sensoren (D₁, ... Dₖ, Dₖ₊₁, Dₖ₊₂, Dₖ₊₃, ..., Dₙ) Teil einer Sensoreinheit (6a) der Sensoreinrichtung (6) sind oder
**dass** zumindest einer der Sensoren Teil einer weiteren Sensoreinheit der Sensoreinrichtung ist.

6. Sensoreinrichtung (6) nach Anspruch 5,
**dadurch gekennzeichnet, dass**
jede Sensoreinheit (6a) ein Sensorgehäuse (G) aufweist, in welchem seine Sensoren (D₁, ... Dₖ, Dₖ₊₁, Dₖ₊₂, Dₖ₊₃, ..., Dₙ), insbesondere mit Abstand zueinander, angeordnet sind.

7. Anordnung (2) zur Detektion und Analyse eines entlang einer Spur (3), insbesondere entlang eines Gleises, bewegten Rades (4) eines Fahrzeugs (5),
**gekennzeichnet durch**
zumindest eine Sensoreinrichtung (6) nach einem der Ansprüche 1 bis 6 und
eine Auswerteeinrichtung (7), welche eingerichtet ist, einen Konturverlauf des Rades (4) anhand eines Zusammenhanges zwischen der räumlichen Anordnung der zumindest drei Sensoren (Dₖ, Dₖ₊₁, Dₖ₊₂, Dₖ₊₃) in der Längsrichtung (x) der Spur (3) und ihren zu dem Zeitpunkt (t) erfassten Sensorsignalen (Sₖ(t), Sₖ₊₁(t), Sₖ₊₂(t), Sₖ₊₃(t)), insbesondere als Funktion oder Kennlinie, zu ermitteln.

8. Anordnung (2) nach Anspruch 7,
**dadurch gekennzeichnet, dass**
die Auswerteeinrichtung (7) eingerichtet ist, das Rad (4) als solches zu erkennen, wenn der ermittelte Konturverlauf einer sich im Wesentlichen entlang eines Kreisbogens erstreckenden Kontur entspricht.

9. Anordnung (2) nach Anspruch 7,
**dadurch gekennzeichnet, dass**
die Auswerteeinrichtung (7) eingerichtet ist, das Rad als solches zu erkennen, wenn der ermittelte Konturverlauf einer sich im Wesentlichen entlang eines Kreisbogens erstreckenden Kontur entspricht, deren Krümmung einen vorgegebenen Krümmungswert überschreitet oder einem vorgegebenen Radkrümmungswert entspricht.

10. Anordnung (2) nach einem der Ansprüche 8 oder 9,
**gekennzeichnet, durch**
eine Zähleinrichtung (8), wobei die Auswerteeinrichtung (7) eingerichtet ist, bei Erkennen des Rades der Zähleinrichtung (8) eine Überfahrt des Rades anzuzeigen.

11. Gleisfreimeldeanlage (1),
**gekennzeichnet, durch**
zumindest eine Anordnung (2) nach einem der Ansprüche 7 bis 10.

12. Verfahren zum Betrieb einer Anordnung (2) zur Detektion und Analyse eines entlang einer Spur (3), insbesondere entlang eines Gleises, bewegten Rades (4) eines Fahrzeugs (5), bei dem mehr als zwei in Längsrichtung (x) der Spur (3) angeordnete Sensoren (D₁, ... Dₖ, Dₖ₊₁, Dₖ₊₂, Dₖ₊₃, ..., Dₙ) bereitgestellt werden,
**dadurch gekennzeichnet, dass**
die Sensoren (D₁, ... Dₖ, Dₖ₊₁, Dₖ₊₂, Dₖ₊₃, ..., Dₙ) derart angeordnet bereitgestellt werden, dass zu einem Zeitpunkt (t) zumindest drei (Dₖ, Dₖ₊₁, Dₖ₊₂, Dₖ₊₃) der Sensoren gleichzeitig mit dem Rad wirkverbunden sind,
wobei ein jeder der zumindest drei Sensoren (Dₖ, Dₖ₊₁, Dₖ₊₂, Dₖ₊₃) ein vom Ausmaß seiner jeweiligen Wirkverbindung mit dem Rad (4) zu dem Zeitpunkt (t) abhängiges Sensorsignal (Sₖ(t), Sₖ₊₁(t), Sₖ₊₂(t), Sₖ₊₃(t)) ausgibt.

13. Verfahren nach Anspruch 12,
**dadurch gekennzeichnet, dass**
ein Konturverlauf des Rades (4) anhand eines Zusammenhanges zwischen der räumlichen Anordnung der zumindest drei Sensoren (Dₖ, Dₖ₊₁, Dₖ₊₂, Dₖ₊₃) in der Längsrichtung (x) der Spur (3) und ihren zu dem Zeitpunkt (t) erfassten Sensorsignalen (Sₖ(t), Sₖ₊₁(t), Sₖ₊₂(t), Sₖ₊₃(t)), insbesondere als Funktion oder Kennlinie, ermittelt wird.

14. Verfahren nach einem der Ansprüche 12 oder 13,
**dadurch gekennzeichnet, dass**
das Rad (4) als solches erkannt wird, wenn der ermittelte Konturverlauf einer sich im Wesentlichen entlang eines Kreisbogens erstreckenden Kontur entspricht.

15. Verfahren nach einem der Ansprüche 12 oder 13,
**dadurch gekennzeichnet, dass**
das Rad (4) als solches erkannt wird, wenn der ermittelte Konturverlauf einer sich im Wesentlichen entlang eines Kreisbogens erstreckenden Kontur entspricht, deren Krümmung einen vorgegebenen Krümmungswert überschreitet oder einem vorgegebenen Radkrümmungswert entspricht.

16. Verfahren nach einem der Ansprüche 14 oder 15,
**dadurch gekennzeichnet, dass**
bei Erkennen des Rades (4) eine Überfahrt des Rades (4) angezeigt wird.

## Claims

1. Sensor device (6) for an arrangement (2) for detection and analysis of a wheel (4), which is moved along a line track (3), in particular along a rail track, of a vehicle (5) with more than two sensors (D₁, ... Dₖ, Dₖ₊₁, Dₖ₊₂, Dₖ₊₃, ..., Dₙ) arranged in the longitudinal direction (x) of the line track (3),
**characterised in that**
the sensors (D₁, ... Dₖ, Dₖ₊₁, Dₖ₊₂, Dₖ₊₃, ..., Dₙ) are arranged in such a manner that, at a point in time (t), at least three (Dₖ, Dₖ₊₁, Dₖ₊₂, Dₖ₊₃) of the sensors are actively connected to the wheel at the same time,
wherein each one of the at least three sensors (Dₖ, Dₖ₊₁, Dₖ₊₂, Dₖ₊₃) is embodied to emit a sensor signal (Sₖ(t), Sₖ₊₁(t), Sₖ₊₂(t), Sₖ₊₃(t)) which depends upon the extent of its respective active connection to the wheel (4) at the point in time (t).

2. Sensor device (6) according to claim 1,
**characterised in that**
the sensors (D₁, ... Dₖ, Dₖ₊₁, Dₖ₊₂, Dₖ₊₃, ..., Dₙ)
- operate according to a proximity switch principle or
- operate according to a transceiver principle, wherein each of the sensors in each case has a dedicated receiver and wherein each of the sensors in each case has a dedicated transmitter or at least two of the sensors have a common transmitter.

3. Sensor device (6) according to one of claims 1 or 2,
**characterised in that**
each of the sensors (D₁, ... Dₖ, Dₖ₊₁, Dₖ₊₂, Dₖ₊₃, ..., Dₙ) is embodied as an inductive sensor.

4. Sensor device (6) according to one of claims 1 to 3,
**characterised in that**
the sensors (D₁, ... Dₖ, Dₖ₊₁, Dₖ₊₂, Dₖ₊₃, ..., Dₙ) are arranged in such a manner that, at the point in time (t) at which the at least three (Dₖ, Dₖ₊₁, Dₖ₊₂, Dₖ₊₃) of the sensors are actively connected to the wheel (4) at the same time, at least one further (D₁, ... Dₖ) of the sensors is actively connected to a further object (11) of the vehicle.

5. Sensor device (6) according to one of claims 1 to 4,
**characterised in that**
the sensors (D₁, ... Dₖ, Dₖ₊₁, Dₖ₊₂, Dₖ₊₃, ..., Dₙ) are part of a sensor unit (6a) of the sensor device (6) or that at least one of the sensors is part of a further sensor unit of the sensor device.

6. Sensor device (6) according to claim 5,
**characterised in that**
each sensor unit (6a) has a sensor housing (G), in which its sensors (D₁, ... Dₖ, Dₖ₊₁, Dₖ₊₂, Dₖ₊₃, ..., Dₙ) are arranged, in particular at a distance from one another.

7. Arrangement (2) for detection and analysis of a wheel (4), which is moved along a line track (3), in particular along a rail track, of a vehicle (5),
**characterised by**
at least one sensor device (6) according to one of claims 1 to 6 and
an evaluation device (7) which is configured to ascertain a contour progression of the wheel (4) on the basis of a relationship between the spatial arrangement of the at least three sensors (Dₖ, Dₖ₊₁, Dₖ₊₂, Dₖ₊₃) in the longitudinal direction (x) of the line track (3) and their sensor signals (Sₖ(t), Sₖ₊₁(t), Sₖ₊₂(t), Sₖ₊₃(t)) recorded at the point in time (t), in particular as a function or characteristic line.

8. Arrangement (2) according to claim 7,
**characterised in that**
the evaluation device (7) is configured to detect the wheel (4) as such if the ascertained contour progression corresponds to a contour that extends substantially along a circular arc.

9. Arrangement (2) according to claim 7,
**characterised in that**
the evaluation device (7) is configured to detect the wheel as such if the ascertained contour progression corresponds to a contour that extends substantially along a circular arc, the curvature of which exceeds a predefined curvature value or corresponds to a predefined wheel curvature value.

10. Arrangement (2) according to one of claims 8 or 9,
**characterised by**
a counting device (8), wherein the evaluation device (7) is configured to indicate a passing of the wheel when the counting device (8) detects the wheel.

11. Track vacancy detection installation (1),
**characterised by**
at least one arrangement (2) according to one of claims 7 to 10.

12. Method for operation of an arrangement (2) for detection and analysis of a wheel (4), which is moved along a line track (3), in particular along a rail track, of a vehicle (5), in which more than two sensors (D₁, ... Dₖ, Dₖ₊₁, Dₖ₊₂, Dₖ₊₃, ..., Dₙ) arranged in the longitudinal direction (x) of the line track (3) are provided,
**characterised in that**
the sensors (D₁, ... Dₖ, Dₖ₊₁, Dₖ₊₂, Dₖ₊₃, ..., Dₙ) are provided arranged in such a manner that, at a point in time (t), at least three (Dₖ, Dₖ₊₁, Dₖ₊₂, Dₖ₊₃) of the sensors are actively connected to the wheel at the same time,
wherein each one of the at least three sensors (Dₖ, Dₖ₊₁, Dₖ₊₂, Dₖ₊₃) emits a sensor signal (Sₖ(t), Sₖ₊₁(t), Sₖ₊₂(t), Sₖ₊₃(t)) which depends upon the extent of its respective active connection to the wheel (4) at the point in time (t).

13. Method according to claim 12,
**characterised in that**
a contour progression of the wheel (4) is ascertained on the basis of a relationship between the spatial arrangement of the at least three sensors (Dₖ, Dₖ₊₁, Dₖ₊₂, Dₖ₊₃) in the longitudinal direction (x) of the line track (3) and their sensor signals (Sₖ(t), Sₖ₊₁(t), Sₖ₊₂(t), Sₖ₊₃(t)) recorded at the point in time (t), in particular as a function or characteristic line.

14. Method according to one of claims 12 or 13,
**characterised in that**
the wheel (4) is detected as such if the ascertained contour progression corresponds to a contour that extends substantially along a circular arc.

15. Method according to one of claims 12 or 13,
**characterised in that**
the wheel (4) is detected as such if the ascertained contour progression corresponds to a contour that extends substantially along a circular arc, the curvature of which exceeds a predefined curvature value or corresponds to a predefined wheel curvature value.

16. Method according to one of claims 14 or 15,
**characterised in that**
a passing of the wheel (4) is indicated when the wheel (4) is detected.

## Revendications

1. Dispositif (6) capteur pour un équipement (2) de détection de d'analyse d'une roue (4), déplacée le long d'une voie (3), en particulier d'une voie ferrée, d'un véhicule (5) comprenant plus de deux capteurs (D₁, ..., Dₖ, Dₖ₊₁, Dₖ₊₂, Dₖ₊₃, ..., Dₙ) disposés dans la direction (x) longitudinal de la voie (3),
**caractérisé en ce que**
les capteurs (D₁, ..., Dₖ, Dₖ₊₁, Dₖ₊₂, Dₖ₊₃, ..., Dₙ) sont disposés, de manière à ce qu'à un instant (t) au moins trois (Dₖ, Dₖ₊₁, Dₖ₊₂, Dₖ₊₃) des capteurs soient en liaison d'action avec la roue en même temps,
dans lequel un parmi chacun des au moins trois capteurs (Dₖ, Dₖ₊₁, Dₖ₊₂, Dₖ₊₃) est constitué pour émettre un signal (Sₖ(t), Sₖ₊₁(t), Sₖ₊₂(t), Sₖ₊₃(t)) de capteur en fonction de la valeur de sa liaison d'action respective avec la roue (4) à l'instant (t).

2. Dispositif (6) capteur suivant la revendication 1,
**caractérisé en ce que**
les capteurs (D₁, ..., Dₖ, Dₖ₊₁, Dₖ₊₂, Dₖ₊₃, ..., Dₙ)
- travaillent suivant un principe d'interrupteur de proximité ou
- travaillent suivant un principe d'émetteur - récepteur, dans lequel chacun des capteurs a respectivement son propre récepteur et dans lequel chacun des capteurs a respectivement son propre émetteur ou au moins deux des capteurs ont un émetteur commun.

3. Dispositif (6) capteur suivant l'une des revendications 1 ou 2,
**caractérisé en ce que**
chacun des capteurs (D₁, ..., Dₖ, Dₖ₊₁, Dₖ₊₂, Dₖ₊₃, ..., Dₙ) est constitué sous la forme d'un capteur inductif.

4. Dispositif (6) capteur suivant l'une des revendications 1 à 3,
**caractérisé en ce que**
les capteurs (D₁, ..., Dₖ, Dₖ₊₁, Dₖ₊₂, Dₖ₊₃, ..., Dₙ) sont disposés de manière à ce qu'à l'instant (t), où les au moins trois (Dₖ, Dₖ₊₁, Dₖ₊₂, Dₖ₊₃) des capteurs sont en liaison d'action avec la roue (4) en même temps, au moins un autre (D₁, ... Dₖ) des capteurs est en liaison d'action avec un autre objet (11) du véhicule.

5. Dispositif (6) capteur suivant l'une des revendications 1 à 4,
**caractérisé en ce que**
les capteurs (D₁, ..., Dₖ, Dₖ₊₁, Dₖ₊₂, Dₖ₊₃, ..., Dₙ) font partie d'une unité (6a) de capteur du dispositif (6) capteur ou **en ce qu'**au moins l'un des capteurs fait partie d'une autre unité de capteur du dispositif capteur.

6. Dispositif (6) capteur suivant la revendication 5,
**caractérisé en ce que**
chaque unité (6a) de capteur a un boîtier (G) de capteur, dans lequel sont disposés ses capteurs (D₁, ..., Dₖ, Dₖ₊₁, Dₖ₊₂, Dₖ₊₃, ..., Dₙ), en particulier en étant à distance les uns des autres.

7. Equipement (2) de détection et d'analyse d'une roue (4), déplacée le long d'une voie (3), en particulier le long d'une voie ferrée, d'un véhicule (5),
**caractérisé par**
au moins un dispositif (6) capteur suivant l'une des revendications 1 à 6, et
un dispositif (7) d'analyse, qui est agencé pour déterminer, en particulier comme fonction ou courbe caractéristique, un tracé du contour de la roue (4), à l'aide d'une relation entre l'agencement dans l'espace des au moins trois capteurs (Dₖ, Dₖ₊₁, Dₖ₊₂, Dₖ₊₃) dans la direction (x) longitudinale de la voie (3) et leurs signaux (Sₖ(t), Sₖ₊₁(t), Sₖ₊₂(t), Sₖ₊₃(t)) de capteur détectés à l'instant (t) .

8. Equipement (2) suivant la revendication 7,
**caractérisé en ce que**
le dispositif (7) d'analyse est agencé pour détecter la roue (4) en tant que telle, si le tracé du contour déterminé correspond à un contour s'étendant sensiblement de le long d'un arc de cercle.

9. Equipement (2) suivant la revendication 7,
**caractérisé en ce que**
le dispositif (7) d'analyse est agencé pour détecter la roue en tant que telle, si le tracé du contour déterminé correspond à un contour s'étendant sensiblement suivant un arc de cercle, dont la courbure dépasse une valeur de courbure donnée à l'avance ou correspond à une courbure de roue donnée à l'avance.

10. Equipement (2) suivant l'une des revendications 8 ou 9,
**caractérisé par**
un dispositif (8) de comptage, dans lequel le dispositif (7) d'analyse est agencé pour indiquer, à la détection de la roue, au dispositif (8) de comptage, un franchissement de la roue.

11. Installation (1) de contrôle de libération de la voie,
**caractérisée par**
au moins un équipement (2) suivant l'une des revendications 7 à 10.

12. Procédé pour faire fonctionner un équipement (2) de détection et d'analyse d'une roue (4), déplacée le long d'une voie (3), en particulier le long d'une voie ferrée, d'un véhicule (5), dans lequel on se procure plus de deux capteurs (D₁, ..., Dₖ, Dₖ₊₁, Dₖ₊₂, Dₖ₊₃, ..., Dₙ) disposés dans la direction (x) longitudinale de la voie (3),
**caractérisé en ce que**
l'on se procure les capteurs (D₁, ..., Dₖ, Dₖ₊₁, Dₖ₊₂, Dₖ₊₃, ..., Dₙ) en les disposant de manière à ce qu'à un instant (t) au moins trois (Dₖ, Dₖ₊₁, Dₖ₊₂, Dₖ₊₃) des capteurs soient en liaison d'action avec la roue en même temps,
dans lequel l'un parmi chacun des au moins des capteurs (Dₖ, Dₖ₊₁, Dₖ₊₂, Dₖ₊₃) émet un signal (Sₖ(t), Sₖ₊₁(t), Sₖ₊₂(t), Sₖ₊₃(t)) dépendant de la valeur de sa liaison d'action respective avec la roue (4) à l'instant (t).

13. Procédé suivant la revendication 12,
**caractérisé en ce que**
l'on détermine, en particulier comme fonction ou comme courbe caractéristique, un tracé du contour de la roue (4), à l'aide d'une relation entre l'agencement dans l'espace des au moins trois capteurs (Dₖ, Dₖ₊₁, Dₖ₊₂, Dₖ₊₃) dans la direction (x) longitudinale de la voie (3) et de leurs signaux (Sₖ(t), Sₖ₊₁(t), Sₖ₊₂(t), Sₖ₊₃(t)) de capteur détectés à l'instant (t).

14. Procédé suivant l'une des revendications 12 ou 13,
**caractérisé en ce que**
l'on détecte la roue (4) en tant que telle, si le tracé du contour déterminé correspond à un contour s'étendant sensiblement suivant un arc de cercle.

15. Procédé suivant l'une des revendications 12 ou 13,
**caractérisé en ce que**
l'on détecte la roue (4) en tant que telle, si le tracé du contour déterminé correspond à un contour s'étendant sensiblement suivant un arc de cercle, dont la courbure dépasse une valeur de courbure donnée à l'avance ou correspond à une courbure de roue donnée à l'avance.

16. Procédé suivant l'une des revendications 14 ou 15,
**caractérisé en ce qu'**
à la détection de la roue (4), on indique un franchissement de la roue (4).
